# FASCICULE DE BREVET EUROPEEN

(11) **EP 0 491 636 B1**
(45) Date de publication et mention de la délivrance du brevet: **09.08.1995**
(21) Numéro de dépôt: 91430029.8
(22) Date de dépôt: 17.12.1991
(51) Int. Cl.: F27D 1/16, C21C 5/44

(54) **Procédé et dispositif de soudure pour le montage et la réparation sur site d'éléments de structure pour constituer des parois d'enceinte**
Anlage und Verfahren für In-Situ-Montage- und zum Reparaturschweissen von Bauteilen zur Herstellung von Gefässwänden
In-situ soldering process and device for assembling and repairing structural elements to form vessel walls

(30) Priorité: 18.12.1990 FR 9016374
(43) Date de publication de la demande: 24.06.1992
(73) Titulaire: Duval, Albert, F-13260 Carry le Rouet (FR)
(72) Inventeur: Duval, Albert, F-13260 Carry le Rouet (FR)
(74) Mandataire: Moretti, René

(56) Documents cités:
- FR-A- 2 634 758
- GB-A- 2 035 524

## Description

La présente invention a pour objet des procédés et dispositifs de soudage pour le montage et la réparation sur site d'éléments de structure pouvant constituer des parois d'enceinte. Le secteur technique de l'invention est celui de la fabrication d'outillage mobile de chantier, en particulier ceux de type à projection de matériau d'apport de soudure, pour réparer ou assembler des éléments d'une structure.

Une des applications principales de l'invention est la réparation de parois de fours en matériau réfractaire dans les industries lourdes, telles que la métallurgie, les cimenteries, les aciéries et la pétrochimie.

Il est connu, en effet, qu'au bout d'un certain nombre de journées de fonctionnement, les fours utilisés donc intensément dans ces industries, nécessitent d'être réparés principalement à cause de fissures se produisant dans leur garniture intérieure en produits réfractaires, ou à cause de détérioration de la surface de ces produits.

Différents procédés. produits et dispositifs ont été développés pour répondre à ce problème et. comme quand une solution de réparation donne satisfaction. elle peut être utilisée pour réaliser également des constructions neuves et réciproquement, on peut relever beaucoup de techniques, dont plus d'une centaine ont fait l'objet de demandes de brevets en FRANCE depuis moins de vingt ans dans ce domaine.

Ainsi, on peut citer. à titre d'exemple de procédé. celui de "gunitage à travers une flamme avec mise en place de deux couches de produits de densité différente", qui a été déposé le 21 Septembre 1984 sous le N° FR. 2.570.811 par l'INSTITUT DE RECHERCHES DE LA SIDERURGIE FRANCAISE IRSID, et celui déposé par la société GLAVERBEL le 13 février 1984 sous le N° FR 2 541 440 concerne le rechargement d'une structure réfractaire dans une ambiance de travail dont la température est supérieure à 600°C.

On relève également diverses demandes de brevets de produits. telles qu'une "composition réfractaire en deux parties à appliquer au pistolet", déposée par la société SHINAGAWA REFRACTORIES CO LTD sous priorité d'une demande japonaise sous le n° FR 2 572 069 déposée le 21 octobre 1985.

Par ailleurs et surtout on connaît les demandes de brevets GB 2 035 524 et GB 8 124 440 déposées respectivement les 24 novembre 1978 et 11 août 1981 par la société COAL INDUSTRY PATENTS LTD et celle FR 2 634 758 déposée le 17 juillet 1989 par la société GLAVERBEL sur des procédés et appareils de pulvérisation d'une matière réfractaire dans une flamme pour la réparation de corps réfractaires tels que des fours : ces documents décrivent en particulier un réservoir de matière constituée de mélange de composants réduits sous forme de particules, ou fluidisée partiellement ou totalement, respectant la répartition de granulométrie de proportion de produits compatibles et soudables avec les éléments de structure à réparer, tout moyen doseur mécanique et une chambre d'entraînement dans laquelle est introduit un gaz tel que de l'air, entraînant ledit mélange qui parvient alors à une lance, où il est mélangé à de l'oxygène en quantité suffisante pour qu'il brûle et constitue une flamme devant permettre normalement le soudage voulu.

On peut citer bien d'autres demandes de brevet sur les procédés et dispositifs destinés à la construction et/ou à la réparation de produits réfractaires, mais en ce qui concerne ceux utilisables dans la réparation, il est connu que quel que soit leurs composants utilisés dans la mise en oeuvre, il s'agit essentiellement de réparation par collage de matériaux d'apport sur la surface à réparer ou dans la fissure à combler.

De plus, dans la plupart des cas, leur application nécessite , afin d'obtenir cependant un accrochage et une efficacité de réparation satisfaisante, d'arrêter les fours ceci n'est pas satisfaisant, d'une part, sur le plan économique car l'arrêt et le redémarrage d'un four prend beaucoup de temps et, d'autre part, sur le plan technique car le résultat obtenu n'a pas de garantie suffisante et peut demander des réparations successives. Ainsi, on note que le procédé objet du Brevet cité précédemment de l'IRSID a été abandonné dans son application.

Il faut noter également que la plupart des appareils utilisés pour la projection de matériaux d'apport comportent des lances dont on enflamme l'orifice de projection par des rajouts d'oxygène amené par un deuxième conduit, comme cela se fait dans les chalumeaux de soudure et/ou d'oxycoupage : aussi lesdits appareils sont réputés à la fois non efficaces pour la raison ci-dessus car ils n'assurent, par manque de calories apportées, qu'un collage des matériaux d'apport sur les supports, et même dangereux par des risques de retour de flamme dans la lance. Ainsi, ces divers appareils demandent la présence de deux opérateurs, un pour chaque lance d'apport. qui sont elles-mêmes de longueur réduite, ce qui explique en partie que l'on ne puisse pas intervenir sur un four en fonction.

Le problème posé est donc de pouvoir projeter un matériau d'apport donné et compatible avec le support à réparer et/ou à assembler, de telle façon que ledit matériau assure une véritable soudure sur ledit support avec lequel il fusionne alors, et cela, sans avoir à arrêter le four s'il s'agit d'intervention de réparation concernant ce type d'appareil, en toute sécurité pour les opérateurs, qui doivent pouvoir se tenir à distance, et avec un minimum de personnes nécessaires.

Une solution au problème posé est un procédé et un dispositif de soudage pour le montage et la réparation sur site d'éléments de structure, pouvant constituer des parois d'enceinte et utilisant un appareil comprenant un réservoir dans lequel est préparée et stockée une quantité donnée d'un mélange de produits, respectant des répartitions de granulométrie et de proportion de produits oxydants et de produits d'apport proprement dits, compatibles et soudables avec les éléments de structure considérés et pouvant constituer un matériau d'apport compatible avec lesdits éléments de structure, tout moyen doseur mécanique permettant d'en contrôler la quantité entraînée depuis l'intérieur du réservoir vers une chambre dite d'entraînement, et une lance raccordée au réservoir et dans laquelle est entraîné ledit mélange par un jet de gaz, lequel mélange est projeté puis enflammé à la sortie de ladite lance, grâce à un apport d'oxygène :
- On envoie, simultanément dans ledit réservoir et dans ladite chambre, de l'oxygène à au moins une basse pression choisie, et au travers tout moyen connu d'alimentation et de fermeture.
- On règle les débits de mélange de produits et de l'oxygène, grâce auxdits moyens connus, en fonction de la distance de projection voulue du mélange de produits obtenu et adapté à la longueur de la lance.
- On contrôle différents paramètres tels qu'au moins la pression dans le réservoir et la température à la sortie de la chambre.
- On projette, grâce à l'entraînement créé par le débit d'oxygène, à travers l'orifice de la seule et unique lance, ledit mélange de produits que l'on soumet à une température suffisante, grâce à tout moyen connu, pour permettre l'inflammation du produit à la sortie de cet orifice.
- On approche celui-ci de l'endroit où l'on veut traiter les éléments de structure, qui sont alors mis en fusion avec ledit produit et soudés entre eux.

En fin d'opération de soudage, ou en cas d'incident au cours de cette opération :
- on coupe l'arrivée d'oxygène par lesdits moyens d'alimentation et de fermeture de ce gaz dans le réservoir et dans la chambre d'entraînement,
- on arrête le moyen doseur mécanique d'alimentation du mélange de produits,
- on envoie simultanément dans ledit réservoir et dans ladite chambre du gaz complètement inerte à une basse pression choisie à travers tout moyen connu d'alimentation et de fermeture,
- on balaye tout le circuit dans lequel peut se trouver à la fois ledit mélange et l'oxygène pour évacuer ceux-ci jusqu'à l'orifice de la lance.

L'invention est définie dans les revendications 1 et 5.

Dans un mode de réalisation préférentiel, on envoie l'oxygène dans ledit réservoir et dans ladite chambre par deux circuits indépendants, ayant chacun une pression d'alimentation choisie et suivant des débits réglables indépendamment l'un de l'autre.

Des caractéristiques préférées se trouvent dans les revendications dépendantes.

Pour améliorer la fiabilité et la sécurité du procédé et des dispositifs suivant l'invention, ces différentes opérations sont effectuées d'une manière automatique, surtout en ce qui concerne la coupure de l'arrivée d'oxygène.

Le résultat est de nouveaux procédés et dispositifs de soudage pour le montage et la réparation sur site d'éléments de structure pouvant constituer des parois d'enceinte, qui offrent tous les avantages qui y sont liés et qui sont explicités précédemment : en particulier, il est bien question ici de soudage et non de collage et on peut envisager, grâce à ces procédés et dispositifs, de pouvoir souder, en fait, tout matériau, que ce soit du béton, de la pierre ou, pour l'application principale retenue, des produits réfractaires. Suivant le type de matériau à assembler ou à réparer, la composition du mélange des produits d'apport sera différente et la source d'inflammation du produit en sortie de lance sera adaptée : ainsi, dans le cas d'un four qui peut être ainsi réparé, même en marche, ce qui est un avantage important de la présente invention, c'est la température du four qui suffit à enflammer les produits, grâce au mélange auto-inflammable contenant des produits oxydants et de l'oxygène.

Cette auto-inflammabilité à haute température étant un risque majeur de ce type de procédé et de dispositif, le balayage possible par un gaz complètement et nécessairement inerte de l'installation en fin d'opération ou en cas d'incident, assure la sécurité nécessaire et permet de supprimer le risque de retour de flamme dans le dispositif.

Un tel procédé et dispositif suivant l'invention ne comprend qu'une seule lance de toute longueur, déterminée suivant la distance à laquelle se situe l'endroit où l'on veut intervenir et cette lance est donc manipulable par un seul opérateur, le dispositif étant contrôlé par ailleurs par un autre opérateur et, de préférence, par un programme et une armoire de contrôle et de commande : ceci complète l'efficacité du système, pour l'adapter à toute demande et en toute sécurité, en augmentant les capacités de réaction et de commandes des circuits d'alarme.

Il est à noter que dans certains dispositifs connus, des mélanges de produits sont entraînés aussi par un jet de gaz, mais celui-ci est alors un gaz relativement inerte, tel que l'air, comme dans le Brevet cité précédemment de la Société COAL INDUSTRY, et nécessitent un apport d'oxygène supplémentaire amené par une deuxième lance pour obtenir la quantité d'énergie voulue : une des spécificités de la présente invention est que le jet de gaz d'entraînement est lui-même constitué de l'oxygène nécessaire, ce qui améliore et simplifie l'opération de projection, et permet donc un véritable soudage, tout en étant suffisamment sécurisant grâce aux autres caractéristiques de l'invention, tel que décrit ci-avant et ci-après.

Le système suivant l'invention répond donc au problème posé et permet une réparation avec tous les critères de fiabilité et de sécurité souhaités, grâce à la soudure alors obtenue et non pas à un collage, comme cela se pratique jusqu'à présent.

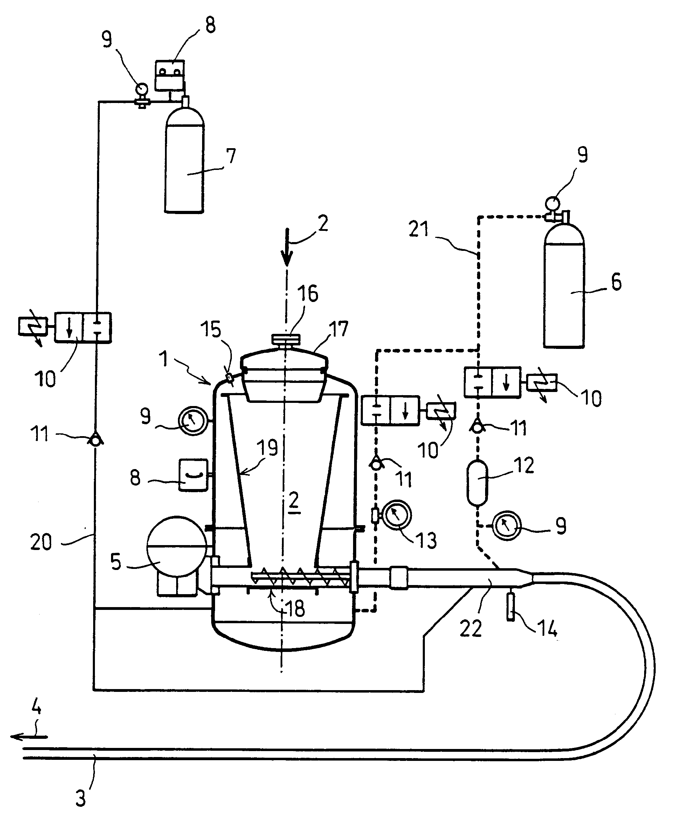

On pourrait citer d'autres avantages de la présente invention mais ceux cités ci-dessus en montrent déjà suffisamment pour en démontrer la nouveauté et l'intérêt, et la description et la figure ci-après représentent un exemple de réalisation de l'invention mais n'ont aucun caractère limitatif : d'autres réalisations sont possibles à partir de revendications qui précisent la portée et l'étendue de cette invention, en particulier en changeant le type d'application comme indiqué ci-dessus et les différents organes de contrôle de dosage et d'alimentation des différents produits et gaz considérés.

La figure unique représente un schéma de l'ensemble d'un dispositif permettant également de réaliser le procédé suivant l'invention.

Le dispositif représenté comprend un certain nombre d'équipements qui sont déjà connus dans d'autres installations, en particulier : un réservoir 1, dans lequel est stocké un mélange 2 de produits pouvant constituer un matériau d'apport compatible avec les éléments de structure à souder et une lance 3 raccordée au réservoir 1, dans laquelle est entraîné ledit mélange 2 par un jet de gaz, lequel mélange est projeté puis enflammé à la sortie 4 de ladite lance 3, grâce à un apport d'oxygène. Les comparaisons avec les équipements existants se limitent à cette présentation générale et, par ailleurs, le dispositif sur l'invention comprend un certain nombre de particularités, telles que représentées et telles que décrites ci-dessous.

En ce qui concerne le réservoir proprement dit 1, celui-ci peut être un ballon métallique en acier inoxydable, de forme cylindrique, fermé à sa partie supérieure par un dôme de remplissage 17 des produits 2, lequel dôme peut comporter un clapet 16 d'explosion en cas de surpression accidentelle à l'intérieur du réservoir. Sur la partie supérieure dudit réservoir, une électro-vanne 15 peut être également installée, afin de pouvoir contrôler la pression à l'intérieur du réservoir et afin, éventuellement, de faire diminuer ladite pression, celle-ci étant contrôlée par ailleurs par un manomètre 9 installé à n'importe quel point de la paroi de ce réservoir, ainsi qu'un pressostat 8 dont la pression peut être calibrée à 2 bars et installé également en tout point du réservoir.

A l'intérieur de celui-ci, le mélange de produits 2 ainsi stocké est entraîné par tout moyen doseur mécanique connu vers l'extérieur de ce réservoir à la demande : ce moyen doseur mécanique 18 peut être constitué, comme sur la représentation de la figure, d'une vis sans fin située à la base d'une trémie conique 19 convergente, recevant ledit mélange 2 et entraînée par un moteur réducteur extérieur 5, avec variateur de vitesse. Ledit mélange 2, ainsi expulsé du réservoir, débouche dans une chambre 22, dite d'entraînement, raccordée à celui-ci et recevant à son autre extrémité la seule lance d'expulsion et de projection 3.

Par ailleurs, un circuit d'alimentation en oxygène 21 à au moins une pression choisie et contrôlée, grâce à tout moyen 9, est raccordé, d'une part, au dit réservoir 1 et, d'autre part, à ladite chambre 22. Ainsi, l'oxygène sert à la fois à la constitution du mélange inflammable à la sortie de la lance 3 et à la propulsion dudit mélange de produit dans celle-ci, supprimant la nécessité d'une deuxième lance. Pour assurer alors la sécurité d'un tel dispositif, un deuxième circuit d'alimentation 20 en gaz complètement inerte raccordé, d'une part, audit réservoir 1 et, d'autre part, à ladite chambre 22 d'entraînement et comprenant au moins un moyen connu 10 d'ouverture et de fermeture du débit de gaz à une pression donnée. Ce circuit de gaz inerte, qui est de préférence de l'azote, permet alors en fin d'opération, ou en cas d'incident, de balayer l'ensemble du dispositif en chassant de celui-ci tout mélange inflammable constitué dans le réservoir 1, la chambre 22 et la lance 23 et cela à une vitesse d'intervention et de débit qui doit être supérieure à celle d'un retour de flamme, dans le dispositif.

Ces circuits comportent chacun au moins un moyen connu 10 de contrôle du débit du gaz tel que, par exemple, des électrovannes, telles que représentées sur la figure, à deux positions, fermée ou ouverte. Les moyens de contrôle 9, figurés sur le schéma, peuvent être des manomètres 9, ou des pressostats, comme ceux indiqués précédemment 8 pour le réservoir 1 et pour le circuit d'azote 20.

Ledit circuit d'oxygène 21 comporte préférentiellement deux dérivations indépendantes, chacune à une pression d'alimentation choisie et suivant des débits réglables, indépendamment l'un de l'autre : l'un est relié au réservoir 1 et peut comporter un manodétendeur 13 contrôlant la pression dans cette dérivation, et l'autre, directement à ladite chambre d'entraînement 22 et pouvant comprendre un réservoir tampon 12 et un manomètre 9. Ces deux dérivations comprennent également chacune, à titre de sécurité, un clapet anti retour 11. L'alimentation de ces deux dérivations constitue le circuit d'alimentation en oxygène 21, à partir d'une réserve d'oxygène 6, elle-même contrôlée par un manomètre 9 : dans tous les cas, la pression d'oxygène dans le réservoir 1 doit être au plus égale à celle d'alimentation de cet oxygène par la deuxième dérivation dans la chambre 22. De préférence la pression d'alimentation en oxygène et donc de ce réservoir 6 de stockage est de 6 bars maximum.

A titre d'exemple, on peut envoyer dans ledit réservoir 1 de l'oxygène à une pression comprise entre 0.200 et 1kg/cm² et on entraîne ledit mélange 2 depuis l'intérieur du réservoir 1 à un débit compris entre 50 et 100 kg/heure, suivant l'importance des travaux à effectuer.

Le circuit d'alimentation 20 en gaz complètement inerte tel que l'azote peut être alimenté par un réservoir d'azote 7, contrôlé par un pressostat 8 et un manomètre 9, avec également, outre l'électrovanne de contrôle du débit 10, un clapet anti-retour 11 ; de préférence la pression d'alimentation d'azote est choisie entre 2 et 4 bars, et les circuits d'alimentation 20 doivent permettre un débit important de ce gaz pour assurer le balayage de sécurité nécessaire.

Toujours pour des questions de sécurité, ledit dispositif comprend divers moyens de contrôle des paramètres tels qu'au moins la pression dans le réservoir 1 grâce audit pressostat 8 et au manomètre 9 ; en particulier, dans un mode préférentiel de réalisation, la pression dans ce réservoir est limitée à 3 bars. On contrôle également la température à la sortie de la chambre 22, grâce à un détecteur thermique 14, tel qu'un fusible thermique.

L'ensemble du dispositif, tel que représenté sur la figure, comprend les différents moyens et composants permettant l'injection du mélange de produits 2 d'apport et du gaz de propulsion et d'inflammation, qui est l'oxygène, dans un seul conduit représenté par la lance 3 vers la sortie 4 sur le lieu d'utilisation ainsi que celui de l'injection du gaz inerte de balayage de sécurité ; par ailleurs, sans que cela soit représenté sur la figure, afin de pouvoir assurer la commande et le contrôle des différents paramètres envisagés ci-dessus, le dispositif est composé également d' une armoire électrique et électronique générale, reliée à tous lesdits organes de commande de débit et de pression et à ceux de contrôle : cette armoire comprend un terminal informatique doté au moins d'un microprocesseur et d'une mémoire chargée par un programme, permettant d'activer lesdites commandes et de contrôler lesdits paramètres en fonction de l'opération de soudage sélectionnée, qui peut varier en fonction de la nature des éléments à souder et de la distance de projection.

Tout le matériel électrique et électronique utilisé est un matériel anti-déflagrant, de préférence conforme au plus haut niveau de protection défini par les normes en vigueur.

Cet ensemble de régulations peut également comprendre un système d'enregistrement sur cassettes du programme choisi et des valeurs des paramètres relevées en cours d'opération.

Le circuit, tel que représenté sur la figure jointe, permet donc, grâce au double circuit, par exemple, d'azote à travers le réservoir et la chambre d'entraînement 22, puis de la lance 3, d'effectuer un balayage par ce gaz inerte en fin d'opération, une fois les circuits d'oxygène coupés et le moyen doseur et d'entraînement 18 arrêté. En particulier, en cas de détection thermique 14 liée à une température trop importante, l'ensemble d'injection d'oxygène peut être arrêté instantanément, le balayage d'azote continuant, tout risque d'inflammation retour est ainsi supprimé.

L'automatisme intégré de ce dispositif réalise donc deux fonctions essentielles qui sont la gestion du processus selon les règles de sécurité, et le réglage des pressions, des vitesses et des débits, en fonction des longueurs de lance et de la nature de l'opération. Les règles de sécurité permettent de déterminer par exemple différents niveaux d'alarme tels qu' un niveau maximum pour un défaut de pression d'oxygène et un défaut sur le fusible thermique ; cette alarme entraîne un arrêt immédiat de l'ensemble avec un balayage d'azote et l' ouverture du clapet de décharge, tel que défini ci-dessus. Un autre niveau ou type d'incident peut être prévu, tel qu'un défaut du moteur doseur ou une pression d'azote insuffisante : une alarme déclenche pour un tel incident l'arrêt du processus, ainsi qu'un balayage d'azote sans ouverture du clapet de décharge. Un bouton d'arrêt d'urgence coupe automatiquement l'alimentation électrique du système, mettant hors-circuit l'automatisme et générant également le balayage d'azote, ainsi que l'ouverture du clapet de décharge.

Enfin, du fait de la compacité des différents éléments décrits ci-dessus, cet ensemble du dispositif peut être rassemblé sur un chariot mobile, de dimensions réduites , pouvant être approché de tous les sites d'intervention possibles. Ce dispositif peut être également utilisé pour des travaux de découpage des éléments de structure considérés, sans apport du matériau d'apport situé dans la trémie du réservoir 2.

## Revendications

1. Procédé de soudage pour le montage et la réparation sur site d'éléments de structure pouvant constituer des parois d'enceinte, et utilisant un appareil comprenant un réservoir (1) dans lequel est préparée et stockée une quantité donnée d'un mélange (2) de produits, respectant des répartitions de granulométrie et de proportion de produits oxydants et de produits d'apport proprement dits, compatibles et soudables avec les éléments de structure considérés et pouvant constituer un matériau d'apport compatible avec lesdits éléments de structure, tout moyen doseur mécanique (18) permettant d'en contrôler la quantité entraînée depuis l'intérieur du réservoir (1) vers une chambre (22) dite d'entraînement, et une lance (3) raccordée au réservoir (1) et dans laquelle est entraîné ledit mélange (2) par un jet de gaz, lequel mélange est projeté puis enflammé à la sortie (4) de ladite lance (3), grâce à un apport d'oxygène, lequel procédé est tel que :
- on envoie, simultanément dans ledit réservoir (1) et dans ladite chambre (22), de l'oxygène à au moins une basse pression choisie, et au travers tout moyen connu (10) d'alimentation et de fermeture,
- on règle les débits de mélange de produits et de l'oxygène, grâce auxdits moyens connus (10, 18), en fonction de la distance de projection voulue du mélange de produits obtenu et adapté à la longueur de la lance (3),
- on contrôle différents paramètres tels qu'au moins la pression dans le réservoir (1) et la température à la sortie de la chambre (22),
- on projette, grâce à l'entraînement créé par le débit d'oxygène, à travers l'orifice (4) de la seule et unique lance (3), ledit mélange de produits que l'on soumet à une température suffisante, grâce à tout moyen connu, pour permettre l'inflammation du produit à la sortie de cet orifice (4),
- on approche celui-ci de l'endroit où l'on veut traiter les éléments de structure, qui sont alors mis en fusion avec ledit produit (2) et soudés entre eux,
- en fin d'opération de soudage, ou en cas d'incident au cours de cette opération :
- on coupe l'arrivée d'oxygène par lesdits moyens (10) d'alimentation et de fermeture de ce gaz dans le réservoir (1) et dans la chambre d'entraînement (22),
- on arrête le moyen doseur mécanique (18) d'alimentation du mélange de produits (2),
- on envoie simultanément dans ledit réservoir (1) et dans ladite chambre (22) du gaz complètement inerte à une basse pression choisie à travers tout moyen connu (10) d'alimentation et de fermeture,
- on balaye tout le circuit dans lequel peut se trouver à la fois ledit mélange (2) et l'oxygène pour évacuer ceux-ci jusqu'à l'orifice (4) de la lance (3).

2. Procédé suivant la revendication 1, caractérisé en ce qu'on envoie l'oxygène dans ledit réservoir (1) et dans ladite chambre (22) par deux circuits indépendants, ayant chacun une pression d'alimentation choisie et suivant des débits réglables indépendamment l'un de l'autre.

3. Procédé suivant l'une quelconque des revendications 1 et 2, caractérisé en ce que la pression d'alimentation du gaz inerte est choisie entre 2 et 4 bars, celle d'alimentation d'oxygène est de 6 bars maximum et la pression dans le réservoir (2) est limitée à 3 bars.

4. Procédé suivant l'une quelconque des revendications 1 à 3, caractérisé en ce qu'on envoie dans ledit réservoir (1) de l'oxygène à une pression comprise entre 0,200 et 1 kg/cm² et qu'on entraîne ledit mélange (2) depuis l'intérieur dudit réservoir (1) à un débit compris entre 50 et 100 kg/heure, selon l'importance des travaux à effectuer.

5. Dispositif de soudage pour le montage et la réparation sur site d'éléments de structure pouvant constituer des parois d'enceinte, comprenant un réservoir (1), dans lequel est stocké un mélange (2) de produits pouvant constituer un matériau d'apport compatible avec lesdits éléments de structure, tout moyen doseur mécanique connu (18) pour entraîner le mélange (2) de l'intérieur du réservoir (1) dans une chambre (22) dite d'entraînement raccordée à celui-ci, et une lance (3) raccordée au réservoir (1) et dans laquelle est entraîné ledit mélange (2) par un jet de gaz, lequel mélange est projeté puis enflammé à la sortie (4) de ladite lance (3), grâce à un apport d'oxygène, lequel dispositif comporte au moins un circuit d'alimentation en oxygène (21) à au moins une pression choisie et contrôlée grâce à tout moyen (9), et raccordé, d'une part, audit réservoir (1) et, d'autre part, à ladite chambre (22), lequel circuit comporte au moins un moyen connu (10) de contrôle du débit de gaz et laquelle chambre (22) d'entraînement est reliée directement à ladite lance (3), et un deuxième circuit d'alimentation (20) en gaz complètement inerte raccordé, d'une part, audit réservoir (1) et, d'autre part, à ladite chambre (22) d'entraînement et comprenant au moins un moyen connu (10) d'ouverture et de fermeture du débit de gaz à une pression donnée.

6. Dispositif de soudage suivant la revendication 5, caractérisé en ce que ledit circuit d'oxygène (21) comporte deux dérivations indépendantes, chacune à une pression d'alimentation choisie et suivant des débits réglables indépendamment l'un de l'autre, grâce chacun à tout moyen connu (10), et reliées l'une au réservoir (1) et l'autre à ladite chambre (22).

7. Dispositif de soudage suivant l'une quelconque des revendications 5 et 6, caractérisé en ce que ledit moyen doseur mécanique (18) est constitué d'une vis sans fin située à la base d'une trémie (19) conique convergente, recevant le mélange (2) à l'intérieur du réservoir (1) et entraînée par un moto-réducteur extérieur (5), avec variateur de vitesse.

8. Dispositif de soudage selon l'une quelconque des revendications 5 à 7, caractérisé en ce qu'il comprend des moyens de contrôle de paramètres, tels qu'au moins la pression dans le réservoir (1) et la température à la sortie de la chambre (22).

9. Dispositif de soudage selon l'une quelconque des revendications 5 à 8, caractérisé en ce qu'il comprend une armoire électrique et électronique générale, reliée à tous les organes de commande des débits et des pressions, et à ceux de contrôle, et comprenant un terminal informatique doté d'au moins un microprocesseur et une mémoire, chargé par un programme permettant d'activer lesdites commandes et de contrôler lesdits paramètres, en fonction de l'opération de soudage sélectionnée.

## Patentansprüche

1. Schweißverfahren für die Vor-Ort-Montage und -Reparatur von Bauteilen, die Gefäßwände darstellen können, unter Verwendung einer Vorrichtung mit einem Reservoir (1), in dem eine gegebene Menge eines Gemischs (2) von Stoffen vorbereitet und gelagert ist, wobei Korngrößen- und Anteilverteilungen von oxidierenden Stoffen und von Zusatzstoffen im eigentlichen Sinn, die mit den betrachteten Bauteilen verträglich und verschweißbar sind und ein mit den Bauteilen verträgliches Zusatzmaterial darstellen können, eingehalten werden, einem beliebigen mechanischen Dosierungsmittel (18), das es ermöglicht, die aus dem Inneren des Reservoirs (1) in eine Mitnahmekammer (22) mitgenommene Stoffmenge zu regeln, und einer an das Reservoir (1) angeschlossenen Lanze (3), in die das Gemisch (2) durch einen Gasstrom mitgenommen wird, wobei das Gemisch am Ausgang (4) der Lanze (3) mittels einer Zufuhr von Sauerstoff ausgestoßen und dann entzündet wird, bei welchem Verfahren:
- gleichzeitig in das Reservoir (1) und die Kammer (22) Sauerstoff mit wenigstens einem ausgewählten niedrigen Druck durch ein beliebiges bekanntes Zufuhr- und Absperrmittel (10) eingespeist wird,
- die Durchsätze des Stoffgemischs und des Sauerstoffs mit Hilfe der bekannten Mittel (10, 18) in Abhängigkeit von der gewünschten Ausstoßstrecke des Stoffgemischs und an die Länge der Lanze (3) angepaßt geregelt werden,
- verschiedene Parameter wie etwa wenigstens der Druck im Reservoir (1) und die Temperatur am Ausgang der Kammer (22) geregelt werden,
- das Stoffgemisch mittels der Mitnahmewirkung des Sauerstoffdurchsatzes durch die Öffnung (4) der einzigen Lanze (3) ausgestoßen und mit Hilfe eines beliebigen bekannten Mittels auf eine ausreichende Temperatur gebracht wird, um die Entzündung des Stoffs am Ausgang dieser Öffnung (4) zu ermöglichen,
- diese in die Nähe des Ortes gebracht wird, an dem die Bauteile behandelt werden sollen, die daraufhin mit dem Stoff geschmolzen und miteinander verschweißt werden,
- am Ende der Schweißoperation oder im Falle einer Störung im Laufe der Operation:
- die Sauerstoffzufuhr in das Reservoir (1) und die Mitnahmekammer (22) mit Hilfe des Zufuhr- und Absperrmittels (10) für dieses Gas unterbrochen wird,
- das zur Zuführung des Stoffgemischs (22) dienende mechanische Dosierungsmittel (18) angehalten wird,
- gleichzeitig in das Reservoir (1) und die Kammer (22) völlig inertes Gas mit einem gewählten niedrigen Druck durch ein be-liebiges bekanntes Zufuhr- und Absperrmittel (10) eingespeist wird,
- die gesamte Leitung, in der sich gleichzeitig das Gemisch (22) und Sauerstoff befinden können, gespült wird, um diese zur Öffnung (4) der Lanze (3) abzuführen.

2. Verfahren nach Anspruch 1,
dadurch gekennzeichnet, daß
Sauerstoff in das Reservoir (1) und die Kammer (22) durch zwei unabhängige Leitungen eingespeist wird, die jeweils einen gewählten Zufuhrdruck haben, der unabhängig voneinander regelbaren Durchsätzen folgt.

3. Verfahren nach einem der Ansprüche 1 und 2,
dadurch gekennzeichnet, daß
der druck der Inertgasversorgung zwischen 2 und 4 bar gewählt wird, der der Sauerstoffversorgung höchstens 6 bar beträgt und der Druck im Reservoir (2) auf 3 bar begrenzt ist.

4. Verfahren nach einem der Ansprüche 1 bis 3,
dadurch gekennzeichnet, daß
in das Reservoir (1) Sauerstoff mit einem Druck zwischen 0,200 und 1 kg/cm² eingespeist wird und das Gemisch aus dem Inneren des Reservoirs (1) mit einem Durchsatz von zwischen 50 und 100 kg/h je nach Größe der durchzuführenden Arbeiten mitgenommen wird.

5. Schweißvorrichtung für die Vor-Ort-Montage und -Reparatur von Bauteilen, die Gefäßwände darstellen können, mit einem Reservoir (1), in dem ein Gemisch (2) von Stoffen gespeichert ist, die ein mit den Bauteilen verträgliches Zusatzmaterial darstellen können, einem beliebigen bekannten Dosierungsmittel (18) zum Mitnehmen des Gemischs (2) vom Inneren des Reservoirs (1) in eine an dieses angeschlossene Mitnahmekammer (22) und einer an das Reservoir (1) angeschlossenen Lanze (3), in die das Gemisch (2) durch einen Gasstrom mitgenommen wird, wobei das Gemisch am Ausgang (4) der Lanze (3) mittels einer Zufuhr von Sauerstoff ausgestoßen und dann entzündet wird,
dadurch gekennzeichnet, daß
die Vorrichtung wenigstens eine durch ein beliebiges Mittel (9) geregelte Sauerstoffversorgungsleitung (21) mit wenigstens einem gewählten Druck umfaßt, die einerseits an das Reservoir (1) und andererseits an die Kammer (22) angeschlossen ist, wobei die Leitung wenigstens ein bekanntes Mittel (10) zur Regelung des Gasdurchsatzes umfaßt, die Mitnahmekammer (22) direkt an die Lanze (3) angeschlossen ist, und daß die Vorrichtung eine zweite Versorgungsleitung (20) für völlig inertes Gas umfaßt, die einerseits an das Reservoir (1) und andererseits an die Mitnahmekammer (22) angeschlossen ist und wenigstens ein bekanntes Mittel (10) zum Öffnen und Schließen des Gasdurchsatzes bei einem gegebenen Druck umfaßt.

6. Schweißvorrichtung nach Anspruch 5,
dadurch gekennzeichnet, daß
die Sauerstoffleitung (21) zwei unabhängige Zweigleitungen umfaßt, jeweils mit einem gewählten Versorgungsdruck entsprechend unabhängig voneinander mit einem beliebigen bekannten Mittel (10) regelbaren Gasdurchsätzen, wobei eine Zweigleitung mit dem Reservoir (1) und die andere mit der Kammer (22) verbunden ist.

7. Schweißvorrichtung nach einem der Ansprüche 5 und 6,
dadurch gekennzeichnet, daß
das mechanische Dosierungsmittel (18) durch eine Förderschnecke gebildet ist, die an der Basis eines Trichters (19) angeordnet ist, der das Gemisch (2) innerhalb des Reservoirs (1) aufnimmt und die durch einen äußeren Getriebemotor (5) mit Geschwindigkeitsregler angetrieben wird.

8. Schweißvorrichtung nach einem der Ansprüche 5 bis 7,
gekennzeichnet durch
Mittel zum Regeln von Parametern wie etwa wenigstens dem Druck im Reservoir (1) und der Temperatur am Ausgang der Kammer (22).

9. Schweißvorrichtung nach einem der Ansprüche 5 bis 8,
gekennzeichnet durch
einen elektrisch/elektronischen Schaltschrank, der mit allen Steuerorganen für Durchsätze und Drücke sowie den Regelorganen verbunden ist und ein Informatikterminal umfaßt, das wenigstens mit einem Mikroprozessor und einem Speicher ausgestattet ist, in dem ein Program geladen ist, das es ermöglicht, die Steuerungen zu aktivieren und die genannten Parameter in Abhängigkeit von der gewählten Schweißoperation zu kontrollieren.

## Claims

1. Soldering process for the on-site assembly and repair of structural elements capable of constituting the walls of an enclosure, using an apparatus which comprises a tank (1) in which is prepared and stored a given quantity of a mixture (2) of products with the distributions of granulometry and of proportion of oxidizing products and of products actually brought in being respected, which products are compatible and joinable by solder with the structural elements considered, and can constitute a supply material compatible with said structural elements, any mechanical measuring means (18) for controlling the quantity of said supply material driven from the inside of the tank (1) towards a chamber (22) called driving chamber, and a pipe (3) connected to the tank (1) and through which said mixture (2) is driven by a gas jet, said mixture being projected, then ignited at its outlet from said pipe (3), due to a supply of oxygen, which process consists in :
- sending, simultaneously into said tank (1) and said chamber (22), some oxygen under at least a selected low pressure, and through any known supply and closure means (10),
- adjusting the mixing rates of the products and oxygen, using said known means (10, 18), as a function of the projecting distance required for the mixture of products obtained and adapted to the length of the pipe (3),
- controlling various parameters such as at least the pressure inside the tank (1) and the temperature at the outlet of the chamber (22),
- projecting, by the driving movement created by the flow of oxygen, and through the orifice 4 of the one and only pipe (3), said mixture of products which is then subjected to a sufficient temperature, by any known means, to allow the igniting of the product coming out of said orifice (4),
- bringing the latter nearer to the place where the structural elements are intended to be treated, which elements are then melted with said product (2) and soldered together,
- at the end of the soldering operation or in case of an incident during said operation :
- cutting off the admission of oxygen with said means (10) for supplying and cutting off said gas in the tank (1) and in the driving chamber (22),
- stopping the mechanical measuring means (18) supplying the mixture of products (2),
- sending completely inert gas simultaneously into said tank (1) and said chamber (22), at a low pressure selected through any known means (10) of supply and closure,
- sweeping the whole circuit in which said mixture (2) and the oxygen may be found, in order to evacuate the latter towards the orifice (4) of the pipe (3).

2. Process according to claim 1, characterized in that the oxygen is sent into said tank (1) and into said chamber (22) through two independent circuits, each one having a selected supply pressure and with flowrates adjustable independently from each other.

3. Process according to any one of claims 1 and 2, characterized in that the inert gas supply pressure is selected to be between 2 and 4 bars, the oxygen supply pressure being 6 bars maximum and the pressure inside the tank (1) being limited to 3 bars.

4. Process according to any one of claims 1 to 3, characterized in that oxygen is sent into said tank (1) at a pressure comprised between 0.200 and 1 kg/cm² and in that said mixture (2) is driven from inside said tank (1) at a flowrate comprised between 50 and 100 kg/hour, depending on the importance of the work to be done.

5. Soldering device for the on-site assembly and repair of structural elements capable of constituting the walls of an enclosure, comprising a tank (1), in which is stored a mixture (2) of products capable of constituting a supply material compatible with said structural elements, any known mechanical measuring means (18) for driving the mixture (2) from inside the tank (1) into a chamber (22) called driving chamber connected with the latter, and a pipe (3) connected with said tank (1) and through which said mixture (2) is driven by a gas jet, said mixture being projected, then ignited at the outlet (4) of said pipe (3), due to oxygen being supplied, said device comprises at least one circuit (21) supplying oxygen at at least a pressure selected and controlled by any means (9), and connected directly to said pipe (3), and a second circuit (20) supplying completely inert gas, which circuit is connected, on the one hand, to said tank (1) and, on the other hand, to said driving chamber (22) and comprising at least one known means (10) for opening and cutting off the flow of gas at a given pressure.

6. Soldering device according to claim 5, characterized in that said oxygen circuit (21) comprises two independent branch circuits, each one having a selected supply pressure, and flowrates adjustable independently from each other, each one due to any known means (10), said branch circuits being connected, one to the tank (1) and the other to said chamber (22).

7. Soldering device according to any one of claims 5 and 6, characterized in that said mechanical measuring measn (18) is constituted of an endless screw situated at the bese of a converging conical hopper (19) receiving the mixture (2) inside the tank (1) and driven by an outside geared motor (5), with variable speed drive.

8. Soldering device according to any one of claims 5 to 7, characterized in that it comprises means for controlling parameters, such as at least the pressure inside the tank (1) and the temperature at the outlet of the chamber (22).

9. Soldering device according to any one of claims 5 to 8, characterized in that it comprises a general electric and electronic cabinet, connected to all the members for controlling the flowrates and pressures, and to all the supervising means, and comprising a computer terminal equipped with at least one microprocessor and one memory, loaded with a programme which enables said controls to be activated and said parameters to be checked, as a function of the selected soldering operation.
